# EUROPEAN PATENT SPECIFICATION

(11) **EP 3 892 589 B1**
(45) Date of publication and mention of the grant of the patent: **04.10.2023**
(21) Application number: 20738923.0
(22) Date of filing: 07.01.2020
(51) Int. Cl.: C01G 53/00, H01M 4/525, H01M 4/505, H01M 10/052, H01M 4/02, C01G 53/04

(54) **METHOD FOR PREPARING POSITIVE ELECTRODE ACTIVE MATERIAL FOR LITHIUM SECONDARY BATTERY AND POSITIVE ELECTRODE ACTIVE MATERIAL PREPARED BY THE METHOD**
VERFAHREN ZUR HERSTELLUNG EINES POSITIVELEKTRODEN-AKTIVMATERIALS FÜR LITHIUMSEKUNDÄRBATTERIE UND POSITIVELEKTRODEN-AKTIVMATERIAL HERGESTELLT DURCH DIESE METHODE
PROCÉDÉ DE PRODUCTION D'UN MATÉRIAU ACTIF D'ÉLECTRODE POSITIVE POUR BATTERIE RECHARGEABLE AU LITHIUM ET MATÉRIAU ACTIF D'ÉLECTRODE POSITIVE PRODUIT PAR CETTE METHODE

(30) Priority: 10.01.2019 KR 20190003458
(43) Date of publication of application: 13.10.2021
(73) Proprietor: LG Chem, Ltd., Seoul 07336, (KR)
(72) Inventor: SHIN, Ji A, Daejeon 34122 (KR); LEE, Kyung Lok, Daejeon 34122 (KR); YOU, Min Kyu, Daejeon 34122 (KR); CHOI, Sang Soon, Daejeon 34122 (KR)
(74) Representative: Hoffmann Eitle
(86) International application number: PCT/KR2020/000293
(87) International publication number: WO 2020/145638

(56) References cited:
- WO-A1-2019/002116
- JP-A- 2004 349 210
- JP-A- 2008 524 820
- JP-A- 2014 192 136
- KR-A- 20010 085 726
- KR-A- 20160 063 855
- US-A1- 2018 047 975
- US-B2- 8 158 283

## Description

### TECHNICAL FIELD

The present invention relates to a method of preparing a positive electrode active material for a lithium secondary battery and a positive electrode for a lithium secondary battery and a lithium secondary battery which include the positive electrode active material prepared by the method.

### BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal oxides have been used as a positive electrode active material of the lithium secondary battery, and, among these oxides, a lithium cobalt oxide, such as LiCoO₂, having a high operating voltage and excellent capacity characteristics has been mainly used. However, since the LiCoO₂ has very poor thermal properties due to an unstable crystal structure caused by delithiation and is expensive, there is a limitation in using a large amount of the LiCoO₂ as a power source for applications such as electric vehicles.

Lithium manganese composite metal oxides (LiMnO₂ or LiMn₂O₄, etc.), lithium iron phosphate compounds (LiFePO₄, etc.), or lithium nickel composite metal oxides (LiNiO₂, etc.) have been developed as materials for replacing the LiCoO₂. Among these materials, research and development of the lithium nickel composite metal oxides, in which a large capacity battery may be easily achieved due to a high reversible capacity of about 200 mAh/g, have been more actively conducted. However, the LiNiO₂ has limitations in that the LiNiO₂ has poorer thermal stability than the LiCoO₂ and, when an internal short circuit occurs in a charged state due to an external pressure, the positive electrode active material itself is decomposed to cause rupture and ignition of the battery. Accordingly, as a method to improve low thermal stability while maintaining the excellent reversible capacity of the LiNiO₂, LiNi_{1-α}Co_{α}O₂(α=0.1 to 0.3), in which a portion of nickel is substituted with cobalt, or a lithium nickel cobalt metal oxide, in which a portion of nickel is substituted with manganese (Mn), cobalt (Co), or aluminum (Al), has been developed.

However, with respect to the lithium nickel cobalt metal oxide, there is a limitation in that capacity is low. In order to increase the capacity of the lithium nickel cobalt metal oxide, a method of increasing an amount of nickel or increasing packing density per unit volume of the positive electrode active material has been studied.

In a case in which the amount of the nickel in the lithium nickel cobalt metal oxide is increased, there was a disadvantage that a reaction between a precursor and a lithium source was not smoothly performed by a one-step sintering process which was conventionally used during the preparation of the lithium nickel cobalt metal oxide. Also, there was a disadvantage that an unstable structure was formed because moisture penetrates into the lithium nickel cobalt metal oxide during a cooling process to affect an increase in resistance of powder.

JP 2014 192136 A describes a method for manufacturing a positive electrode for nonaqueous electrolyte secondary battery use comprising a step of preparing a slurry by mixing a positive electrode active material, a conductive material, and a binder solvent containing a binder and a solvent dissolving the binder, wherein the positive electrode active material has a moisture content of 10-500 ppm, the conductive material has a moisture content of 10-500 ppm, and the binder solvent has a moisture content of 50-1000 ppm.

US 2018/0047975 A1 concerns a particulate precursor compound for manufacturing a lithium transition metal oxide powder for use as an active positive electrode material in lithium-ion batteries, the precursor having the general formula NiₓMn_{y}Co_{z}AₐOᵥ(OH)_{w}, wherein 0.15L and a right peak having a peak intensity IR, and a peak intensity ratio R=IR/IL with R>0.7, and the XRD pattern being free of peaks belonging to either one or both of a spinel and an oxyhydroxide compound.

US 8,158,283 B2 relates to a positive electrode active material, comprising lithium/nickel composite oxide powders obtained by water washing fired powders, followed by filtering and drying.

Thus, there is a need to develop a method of preparing a lithium nickel cobalt metal oxide with a stable structure.

### DISCLOSURE OF THE INVENTION

### TECHNICAL PROBLEM

An aspect of the present invention provides a method of preparing a positive electrode active material which may prepare a positive electrode active material with a stable structure by controlling moisture penetration during the preparation of the positive electrode active material.

Another aspect of the present invention provides a positive electrode active material in which a stable structure is formed by reducing a moisture content in the positive electrode active material.

Another aspect of the present invention provides a positive electrode including the positive electrode active material.

Another aspect of the present invention provides a lithium secondary battery in which capacity and resistance characteristics are improved by including the positive electrode.

### TECHNICAL SOLUTION

According to an aspect of the present invention, there is provided a method of preparing a positive electrode active material which includes: mixing a lithium raw material with a high nickel-containing transition metal hydroxide containing nickel in an amount of 60 mol% or more based on a total number of moles of the transition metal hydroxide and sintering the mixture to prepare a positive electrode active material, wherein the sintering includes a sintering step of heat-treating at 700°C to 900°C for 8 hours to 12 hours; a cooling step of cooling to room temperature; and an aging step of having a holding time when a temperature reaches a specific point during the cooling step, wherein the transition metal hydroxide is represented by Formula 1:

[Formula 1] NiₓCo_{y}Mn_{z}M¹_{w}(OH)₂

wherein, in Formula 1,
0.6≤x≤1, 0<y≤0.4, 0<z≤0.4, and 0≤w≤0.01, and M¹ is at least one selected from the group consisting of Al, Zr, Ti, Mg, Ta, Nb, Mo, Cr, Ba, Sr, and Ca.

According to another aspect of the present invention, there is provided a positive electrode active material which is prepared by the above-described method and has a moisture content of 685 ppm or less.

According to another aspect of the present invention, there is provided a positive electrode for a lithium secondary battery which includes the positive electrode active material according to the present invention.

According to another aspect of the present invention, there is provided a lithium secondary battery including the positive electrode according to the present invention.

### ADVANTAGEOUS EFFECTS

According to the present invention, since an aging step of having a holding time when a temperature in a reactor reaches a specific point during a cooling step is added to suppress penetration of moisture into a positive electrode active material which occurs in sintering and cooling steps for preparing the positive electrode active material, the penetration of the moisture into the positive electrode active material may be suppressed to prepare a positive electrode active material with a stable structure. In addition, when the positive electrode active material having improved powder resistance thus prepared is used in a battery, interfacial resistance and capacity may be further improved.

### BRIEF DESCRIPTION OF THE DRAWINGS

FIG. 1 is a graph illustrating a sintering step according to the present invention; and
FIG. 2 is a graph illustrating a sintering step of a conventional positive electrode active material.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terms used in the present specification are used to merely describe exemplary embodiments, but are not intended to limit the invention. The terms of a singular form may include plural forms unless referred to the contrary.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

In the present specification, the expression "%" denotes wt% unless explicitly stated otherwise.

### Method of Preparing Positive Electrode Active Material

Hereinafter, a method of preparing a positive electrode active material according to the present invention will be described in detail.

The method of preparing a positive electrode active material according to the present invention includes: mixing a lithium raw material with a high nickel-containing transition metal hydroxide containing nickel in an amount of 60 mol% or more based on a total number of moles of the transition metal hydroxide and sintering the mixture to prepare a positive electrode active material, wherein the sintering includes a sintering step of heat-treating at 700°C to 900°C for 8 hours to 12 hours; a cooling step of cooling to room temperature; and an aging step of having a holding time when a temperature reaches a specific point during the cooling step.

First, a lithium raw material and a high nickel-containing transition metal hydroxide containing nickel in an amount of 60 mol% or more based on a total number of moles of transition metals in the transition metal hydroxide are mixed.

The transition metal hydroxide is represented by the following Formula 1.

[Formula 1] NiₓCo_{y}Mn_{z}M¹_{w}(OH)₂

In Formula 1, M¹ is a doping element substituted at a transition metal site in the transition metal hydroxide, and may be at least one metallic element selected from the group consisting of aluminum (Al), zirconium (Zr), titanium (Ti), magnesium (Mg), tantalum (Ta), niobium (Nb), molybdenum (Mo), chromium (Cr), barium (Ba), strontium (Sr), and calcium (Ca).
x represents a molar ratio of a nickel element in the transition metal hydroxide, wherein x satisfies 0.60≤x≤1, preferably 0.70≤x≤1, more preferably 0.80≤x≤0.95, and most preferably 0.85≤x≤0.95.
y represents a molar ratio of cobalt in the transition metal hydroxide, wherein y satisfies 0<y≤0.40 and preferably 0.02≤y≤0.10.
z represents a molar ratio of manganese in the transition metal hydroxide, wherein z satisfies 0<z≤0.40 and preferably 0.02≤z≤0.10.
w represents a molar ratio of the doping element M¹ in the transition metal hydroxide, wherein w satisfies 0≤w≤0.01, preferably 0≤w≤0.008, and most preferably 0≤w≤0.005.

When the molar ratios, x, y, and z, of the transition metals in the transition metal hydroxide satisfy the above ranges, a positive electrode active material having excellent energy density and exhibiting high capacity characteristics may be obtained.

A commercially available product may be purchased and used as the transition metal hydroxide represented by Formula 1 or the transition metal hydroxide represented by Formula 1 may be prepared according to a method of preparing a transition metal hydroxide which is well known in the art.

For example, the transition metal hydroxide represented by Formula 1 may be prepared by a co-precipitation reaction by adding an ammonium cation-containing complexing agent and a basic compound to a metal solution including a nickel-containing raw material, a cobalt-containing raw material, and a manganese-containing raw material.

The nickel-containing raw material, for example, may include nickel-containing acetic acid salts, nitrates, sulfates, halides, sulfides, hydroxides, oxides, or oxyhydroxides, and may specifically include Ni(OH)₂, NiO, NiOOH, NiCO₃·2Ni(OH)₂·4H₂O, NiC₂O₂·2H₂O, Ni(NO₃)₂·6H₂O, NiSO₄, NiSO₄·6H₂O, a fatty acid nickel salt, a nickel halide, or a combination thereof, but the present invention is not limited thereto.

The cobalt-containing raw material may include cobalt-containing acetic acid salts, nitrates, sulfates, halides, sulfides, hydroxides, oxides, or oxyhydroxides, and may specifically include Co(OH)₂, CoOOH, Co(OCOCH₃)₂·4H₂O, Co(NO₃)₂·6H₂O, Co(SO₄)₂·7H₂O, or a combination thereof, but the present invention is not limited thereto.

The manganese-containing raw material, for example, may include manganese-containing acetic acid salts, nitrates, sulfates, halides, sulfides, hydroxides, oxides, oxyhydroxides, or a combination thereof, and may specifically includea manganese oxide such as Mn₂O₂, MnO₂, and Mn₃O₄; a manganese salt such as MnCO₃, Mn(NO₃)₂, MnSO₄, manganese acetate, manganese dicarboxylate, manganese citrate, and a fatty acid manganese salt; a manganese oxyhydroxide, manganese chloride, or a combination thereof, but the present invention is not limited thereto.

Also, the transition metal hydroxide may further selectively include a doping element M¹, if necessary. The doping element M¹ may be used without particular limitation as long as it may contribute to improving structural stability of the positive electrode active material, wherein, for example, sulfates, nitrates, acetic acid salts, halides, hydroxides, or oxyhydroxides containing at least one metallic element selected from the group consisting of Al, Zr, Ti, Mg, Ta, Nb, Mo, Cr, Ba, Sr, and Ca may be used, and these materials may be used without particular limitation as long as they may be dissolved in a solvent such as water.

The metal solution may be prepared by adding the nickel-containing raw material, the cobalt-containing raw material, and the manganese-containing raw material to a solvent, specifically water, or a mixed solvent of water and an organic solvent (e.g., alcohol etc.) which may be uniformly mixed with the water, or may be prepared by mixing an aqueous solution of the nickel-containing raw material, an aqueous solution of the cobalt-containing raw material, and an aqueous solution of the manganese-containing raw material.

The ammonium cation-containing complexing agent, for example, may include NH₄OH, (NH₄)₂SO₄, NH₄NO₃, NH₄Cl, CH₃COONH₄, (NH₄)₂CO₃, or a combination thereof, but the present invention is not limited thereto. The ammonium cation-containing complexing agent may be used in the form of an aqueous solution, and, in this case, water or a mixture of water and an organic solvent (specifically, alcohol etc.), which may be uniformly mixed with the water, may be used as a solvent.

The basic compound may include a hydroxide of alkali metal or alkaline earth metal, such as NaOH, KOH, or Ca(OH)₂, a hydrate thereof, or a combination thereof. The basic compound may also be used in the form of an aqueous solution, and, in this case, water or a mixture of water and an organic solvent (specifically, alcohol etc.), which may be uniformly mixed with the water, may be used as a solvent.

The basic compound is added to adjust a pH of a reaction solution, wherein the basic compound may be added in an amount such that the pH of the metal solution is 10.5 to 13, for example, 11 to 13.

The co-precipitation reaction may be performed in a temperature range of 40°C to 70°C in an inert atmosphere such as nitrogen or argon.

Particles of the transition metal hydroxide are formed by the above-described process, and are precipitated in the reaction solution. The precipitated transition metal hydroxide particles may be separated according to a conventional method and dried to prepare a positive electrode active material precursor.

As the lithium raw material, various lithium raw materials known in the art may be used without limitation, and, for example, lithium-containing carbonates (e.g., lithium carbonate, etc.), lithium-containing hydrates (e.g., lithium hydroxide monohydrate (LiOH·H₂O), etc.), lithium-containing hydroxides (e.g., lithium hydroxide, etc.), lithium-containing nitrates (e.g., lithium nitrate (LiNO₃), etc.), or lithium-containing chlorides (e.g., lithium chloride (LiCl), etc.) may be used. Preferably, at least one selected from the group consisting of lithium hydroxide and lithium carbonate may be used as the lithium raw material.

Preferably, the high nickel-containing transition metal hydroxide and the lithium raw material may be mixed such that a molar ratio of metal:lithium (Li) is 1:1.05, and, in this case, since an excessive amount of lithium relative to the transition metals is reacted, a cation mixing phenomenon, in which nickel ions are partially substituted into a lithium layer, may be controlled and a stable structure may be formed.

Subsequently, a mixture, in which the high nickel-containing transition metal hydroxide and the lithium raw material are mixed, is heat-treated in an oxygen atmosphere (oxygen input) (sintering step). The sintering may be performed in a temperature range of 700°C to 900°C for 8 hours to 12 hours, for example, 750°C to 850°C for 9 hours to 11 hours.

In a case in which the sintering is performed in an oxygen atmosphere as in the present invention, a positive active material having a structurally stable layered structure may be formed by preventing oxygen deficiency. In contrast, in a case in which the sintering is performed in an air atmosphere or an inert atmosphere other than the oxygen atmosphere, since the oxygen deficiency of the positive electrode active material is intensified, structural stability may be reduced.

Also, in a case in which the sintering is performed in the temperature and time range of the present invention, since the reaction between the lithium and the transition metal hydroxide may be facilitated and the sufficient reaction may be performed, a stable layered structure may be formed. For example, in a case in which the sintering is performed outside the above range and performed in a range less than the above sintering temperature and time range, a reaction temperature of the lithium and the transition metal hydroxide may not be reached so that the layered structure may not be formed, and, in a case in which the sintering is performed in a range greater than the above sintering temperature and time range, since lithium is discharged to a surface and an excessive amount of the lithium is present on the surface, the positive electrode active material with an unstable structure may be formed.

Subsequently, a sintered product heat-treated as described above is cooled to room temperature (cooling step).

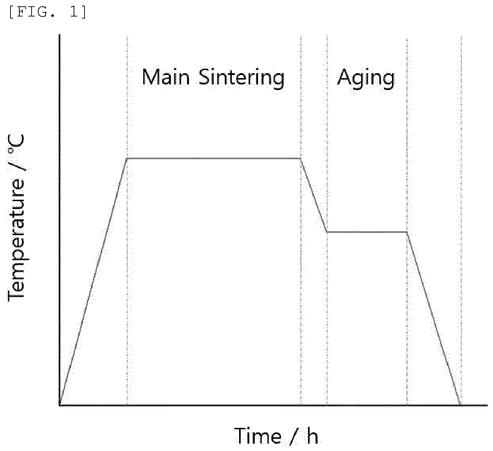

In this case, as illustrated in FIG. 1, a holding time is performed when the temperature reaches a specific point during the cooling step (aging step).

A reaction from the sintering step of the positive electrode active material to the completion of the aging step may be performed in an oxygen atmosphere.

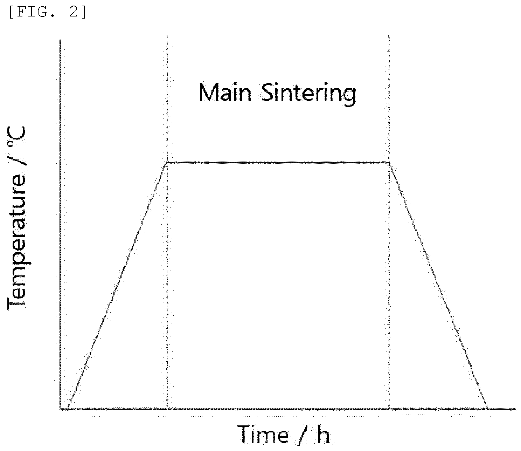

During the preparation of a conventional positive electrode active material, a cooling process, after sintering, is slowly performed to room temperature as illustrated in FIG. 2. In this case, since moisture present in the air is easily adsorbed to the positive electrode active material, a moisture content of the positive electrode active material is increased. In a case in which the positive electrode active material with the increased moisture content is used in a battery, it may be causes of an increase in resistance, a decrease in initial capacity, and a decrease in lifetime.

However, when the positive electrode active material is prepared as in the present invention, since the reaction is performed in the oxygen atmosphere from the sintering step to the completion of the aging step of having the holding time when the temperature reaches a specific point during the cooling step, a degree of exposure of the positive electrode active material to the air is minimized, and thus, penetration of moisture into the positive electrode active material may be suppressed by suppressing a phenomenon in which the moisture is adsorbed to the positive electrode active material.

For example, in a case in which the sintering and the cooling are performed in an oxygen atmosphere throughout the reaction, since the positive electrode active material is not exposed to the air, the penetration of the moisture into the positive electrode active material may be easily suppressed, but, since processing time and cost are increased due to the maintaining of the oxygen atmosphere during cooling time of the positive electrode active material, process efficiency is reduced. Thus, since the degree of exposure of the positive electrode active material to the air is suppressed by performing the aging step at a specific point during the sintering and cooling of the positive electrode active material, easy of the process may be improved by reducing the processing time and cost while suppressing the moisture penetration.

For example, the holding time of the aging step may be performed at a ratio of 8% to 50%, for example, 10% to 20% relative to that of the sintering step. In this case, the penetration of the moisture into the positive electrode active material may be easily suppressed. For example, in a case in which the holding time of the aging step is performed at a ratio of less than 8% relative to that of the sintering step, since the positive electrode active material may be exposed to the air even if the aging step is performed, moisture may penetrate into a surface of the positive electrode active material, or, in a case in which the holding time of the aging step is performed at a ratio of 50% or more, since manufacturing costs may also be increased as the processing time increases, it is disadvantageous in terms of efficiency.

Preferably, the aging step may maintain the temperature for 1 hour to 4 hours when the temperature in the reactor reaches 300°C to 600°C during the cooling step, and, more preferably, the aging step may maintain the temperature for 1 hour to 2 hours when the temperature in the reactor reaches 400°C to 500°C during the cooling step.

### Positive Electrode Active Material

Also, the present invention provides a positive electrode active material which is prepared by the above-described method and has a moisture content of 685 ppm or less, preferably 550 ppm or less, and more preferably 300 ppm to 510 ppm.

With respect to the positive electrode active material prepared by the method of preparing a positive electrode active material according to the present invention, since the moisture penetration is controlled during the sintering and a stable structure is formed, a moisture penetration rate is reduced, and, as a result, the positive electrode active material has a moisture content of 685 ppm or less, for example, 550 ppm or less.

### Positive Electrode

Furthermore, the present invention provides a positive electrode for a lithium secondary battery which includes the above positive electrode active material. Specifically, the positive electrode for a secondary battery includes a positive electrode collector and a positive electrode active material layer formed on the positive electrode collector, wherein the positive electrode active material layer includes the positive electrode active material according to the present invention.

In this case, since the positive electrode active material including first positive electrode active material and second positive electrode active material, which is the same as described above, is used as the positive electrode active material, a positive electrode having high rolling density is provided.

In this case, since the positive electrode active material is the same as described above, detailed descriptions thereof will be omitted, and the remaining configurations will be only described in detail below.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collectormay typically have a thickness of 3 um to 500 um, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may selectively include a binder as well as a conductive agent, if necessary, in addition to the above-described positive electrode active material.

In this case, the positive electrode active material may be included in an amount of 80 wt% to 99 wt%, for example, 85 wt% to 98.5 wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 0.1 wt% to 15 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVdF), polyvinylidene fluoride-hexafluoropropylene copolymer (PVdF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, a styrene-butadiene rubber (SBR), a fluorine rubber, or various copolymers thereof, and any one thereof or a mixture of two or more thereof may be used. The binder may be included in an amount of 0.1 wt% to 15 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as selectively the binder and the conductive agent in a solvent, is coated on the positive electrode collector, and the positive electrode may then be prepared by drying and rolling the coated positive electrode collector.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

### Lithium Secondary Battery

Furthermore, in the present invention, an electrochemical device including the positive electrode may be prepared. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further selectively include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 um, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer selectively includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a (semi)metal-based material alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0 < β < 2), SnO₂, vanadium oxide, and lithium vanadium oxide; or a composite including the (semi)metal-based material and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVdF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a fluoro rubber, and various copolymers thereof.

The conductive agent is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder, and nickel powder; conductive whiskers such as zinc oxide whiskers and potassium titanate whiskers; conductive metal oxide such as titanium oxide; or polyphenylene derivatives may be used.

For example, the negative electrode active material layer may be prepared by coating a composition for forming a negative electrode, which is prepared by dissolving or dispersing selectively the binder and the conductive agent as well as the negative electrode active material in a solvent, on the negative electrode collector and drying the coated negative electrode collector, or may be prepared by casting the composition for forming a negative electrode on a separate support and then laminating a film separated from the support on the negative electrode collector.

In the lithium secondary battery, the separator separates the negative electrode and the positive electrode and provides a movement path of lithium ions, wherein any separator may be used as the separator without particular limitationas as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be selectively used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond, an aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

### PREFERRED MODE FOR CARRYING OUT THE INVENTION

Hereinafter, the present invention will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present invention to those skilled in the art.

### Examples

### Example 1

A mixture, in which Ni_{0.8}Co_{0.1}Mn_{0.1}(OH)₂, as a positive electrode active material precursor, and LiOH were mixed such that a molar ratio of Me:Li was 1:1.05, was sintered at 750°C for 10 hours in an oxygen atmosphere.

After the sintering, the mixture was cooled to room temperature to prepare a positive electrode active material, but, when the temperature in a reactor reached 400°C during the cooling, the temperature was held for 1.5 hours in an oxygen atmosphere.

### Example 2

A positive electrode active material was prepared in the same manner as in Example 1 except that, when the temperature in the reactor reached 500°C during the cooling, the temperature was held for 1 hour.

### Example 3

A positive electrode active material was prepared in the same manner as in Example 1 except that, when the temperature in the reactor reached 500°C during the cooling, the temperature was held for 1.5 hours.

### Example 4

A positive electrode active material was prepared in the same manner as in Example 1 except that, when the temperature in the reactor reached 500°C during the cooling, the temperature was held for 2 hours.

### Comparative Example 1

A positive electrode active material was prepared in the same manner as in Example 1 except that the mixture was cooled to room temperature at once in an oxygen atmosphere when the sintering was completed.

### Experimental Example 1: Measurement of Moisture Content in Positive Electrode Active Material

Moisture contents of the positive electrode active materials prepared in Examples 1 to 4 and Comparative Example 1 were measured.

Specifically, the moisture contents of the positive electrode active materials prepared in Examples 1 to 4 and Comparative Example 1 were analyzed by a moisture absorption analyzer (Karl Fischer water determination, Mettler-Toledo, LLC, Germany), and the results thereof are presented in Table 1 below.

**[Table 1]**

| | Moisture content (ppm) |
|---|---|
| Example 1 | 504 |
| Example 2 | 414 |
| Example 3 | 401 |
| Example 4 | 398 |
| Comparative Example 1 | 868 |

As illustrated in Table 1, it may be confirmed that the moisture contents of the positive electrode active materials prepared in Examples 1 to 4, in which the aging step was performed in the oxygen atmosphere during cooling, were significantly reduced in comparison to the moisture content of the positive electrode active material prepared in Comparative Example 1 which was cooled in the air.

### Experimental Example 2: Confirmation of Life Characteristics of Lithium Secondary Battery

Lithium secondary batteries were prepared by using the positive electrode active materials respectively prepared in Examples 1 to 4 and Comparative Example 1, and life characteristics thereof were measured. In this case, the lithium secondary batteries were prepared in the same manner described below except that the positive electrode active materials respectively prepared in Examples 1 to 4 and Comparative Example 1 were used.

Specifically, each of the positive electrode active materials prepared in Examples 1 to 4 and Comparative Example 1, a carbon black conductive agent, and a polyvinylidene fluoride (PVdF) binder were mixed in a weight ratio of 96:2:2 in an N-methylpyrrolidone (NMP) solvent to prepare a composition for forming a positive electrode. A 20 um thick aluminum current collector was coated with the composition for forming a positive electrode, dried, and then roll-pressed to prepare a positive electrode. Subsequently, after the above-prepared positive electrode and lithium metal, as a negative electrode, were disposed in a CR 2032-type coin cell, a porous polyethylene separator was disposed between the positive electrode and the negative electrode and stacked. Subsequently, an electrolyte solution, in which 1 M LiPF₆ was dissolved in a mixed solvent in which ethylene carbonate:dimethyl carboante:diethyl carbonate were mixed in a volume ratio of 3:4:3, was injected to prepare lithium secondary batteries according to Examples 1 to 4 and Comparative Example 1.

Each of the above-prepared lithium secondary batteries of Examples 1 to 4 and Comparative Example 1 was charged at a constant current of 0.2 C to 4.25 V at room temperature of 25°C and cut-off charged at 0.005 C. Thereafter, each lithium secondary battery was discharged at a constant current of 0.2 C to a voltage of 2.5 V to measure initial discharge capacity. Also, each lithium secondary battery was charged at a constant current of 0.3 C to 4.25 V at 45°C, cut-off charged at 0.005 C, and then discharged at a constant current of 0.3 C to a voltage of 2.5 V, and, after this cycle was repeated 30 times, life characteristics of the lithium secondary batteries according to Examples 1 to 4 and Comparative Example 1 were measured, and the results thereof are presented in Table 2 below.

**[Table 2]**

| | Initial discharge capacity (mAh/g) | Capacity retention in 30^{th} cycle (%) |
|---|---|---|
| Example 1 | 215.0 | 94.2 |
| Example 2 | 218.2 | 93.3 |
| Example 3 | 219.5 | 93.8 |
| Example 4 | 216.1 | 93.6 |
| Comparative Example 1 | 210.7 | 90.8 |

As illustrated in Table 2, it may be confirmed that both initial discharge capacities and cycle characteristics of the secondary batteries including the positive electrode active materials of Examples 1 to 4 were improved in comparison to those of the secondary battery including the positive electrode active material of Comparative Example 1.

### Experimental Example 3

Resistance characteristics of each of the lithium secondary batteries of Examples 1 to 4 and Comparative Example 1, which were prepared in Experimental Example 2, were confirmed. Specifically, after each of the lithium secondary batteries of Examples 1 to 4 and Comparative Example 1 was charged at a constant current of 0.2 C at room temperature (25°C), each lithium secondary battery was discharged at a constant current of 0.2 C to 4.25 V to measure a voltage drop, and initial resistance was measured by dividing the voltage value at 60 seconds by a current value. Also, each lithium secondary battery was charged at a constant current of 0.3 C to 4.25 V at 45°C, cut-off charged at 0.005 C, and then discharged at a constant current of 0.3 C to a voltage of 2.5 V, and this cycle was repeated 30 times. In this case, a resistance increase rate was calculated as a percentage of the amount of resistance increase relative to the first cycle, and the results thereof are presented in Table 3 below.

**[Table 3]**

| | Initial resistance (Ω) | Resistance increase rate in 30^{th} cycle (%) |
|---|---|---|
| Example 1 | 23.3 | 122.5 |
| Example 2 | 20.5 | 100.0 |
| Example 3 | 20.1 | 90.7 |
| Example 4 | 21.4 | 117.8 |
| Comparative Example 1 | 23.5 | 141.3 |

As illustrated in Table 3, it may be confirmed that resistance increase rates after 30 cycles of the secondary batteries including the positive electrode active materials of Examples 1 to 4 were significantly improved in comparison to those of the secondary battery including the positive electrode active material of Comparative Example 1.

## Claims

1. A method of preparing a positive electrode active material, the method comprising: mixing a lithium raw material with a high nickel-containing transition metal hydroxide containing nickel in an amount of 60 mol% or more based on a total number of moles of the transition metal hydroxide and sintering the mixture to prepare a positive electrode active material,
wherein the sintering comprises a sintering step of heat-treating at 700°C to 900°C for 8 hours to 12 hours;
a cooling step of cooling to room temperature; and
an aging step of having a holding time when a temperature reaches a specific point during the cooling step,
wherein the transition metal hydroxide is represented by Formula 1:
[Formula 1] NiₓCo_{y}Mn_{z}M¹_{w}(OH)₂
wherein, in Formula 1,
0.6≤x≤1, 0<y≤0.4, 0<z≤0.4, and 0≤w≤0.01, and
M¹ is at least one selected from the group consisting of Al, Zr, Ti, Mg, Ta, Nb, Mo, Cr, Ba, Sr, and Ca.

2. The method of claim 1, wherein a reaction from the sintering step to completion of the aging step is performed in an oxygen atmosphere.

3. The method of claim 1, wherein the holding time of the aging step relative to the sintering step is performed at a ratio of 8% to 50%.

4. The method of claim 3, wherein the holding time of the aging step relative to the sintering step is performed at a ratio of 10% to 20%.

5. The method of claim 1, wherein the aging step maintains the temperature for 1 hour to 4 hours when the temperature in a reactor reaches 300°C to 600°C during the cooling step.

6. The method of claim 5, wherein the aging step maintains the temperature for 1 hour to 2 hours when the temperature in the reactor reaches 400°C to 500°C during the cooling step.

7. A positive electrode active material which is prepared by the method of any one of claims 1 to 6 and has a moisture content of 685 ppm or less.

8. A positive electrode for a lithium secondary battery, the positive electrode comprising the positive electrode active material of claim 7.

9. A lithium secondary battery comprising the positive electrode of claim 8.

## Patentansprüche

1. Verfahren zur Herstellung eines positiven Elektrodenaktivmaterials, wobei das Verfahren umfasst:
Mischen eines Lithiumausgangsmaterials mit einem hochnickelhaltigen Übergangsmetallhydroxid, das Nickel in einer Menge von 60 mol-% oder mehr, bezogen auf eine Gesamtmolzahl des Übergangsmetallhydroxids, enthält und Sintern der Mischung zur Herstellung eines positiven Elektrodenaktivmaterials,
wobei das Sintern einen Sinterschritt zur Wärmebehandlung bei 700°C bis 900°C für 8 Stunden bis 12 Stunden,
einen Abkühlungsschritt zur Abkühlung auf Raumtemperatur und
einen Alterungsschritt, der eine Haltezeit aufweist, wenn die Temperatur einen bestimmten Punkt während des Abkühlungsschritts erreicht, umfasst,
wobei das Übergangsmetallhydroxid durch Formel 1 dargestellt wird:
[Formel 1] NiₓCo_{y}Mn_{z}M¹_{w}(OH)₂
wobei in Formel 1
0,6≤x≤1, 0<y≤0,4, 0<z≤0,4 und 0≤w≤0,01 ist und
M¹ mindestens eines, ausgewählt aus der Gruppe, bestehend aus Al, Zr, Ti, Mg, Ta, Nb, Mo, Cr, Ba, Sr und Ca, ist.

2. Verfahren nach Anspruch 1, wobei eine Reaktion ab dem Sinterschritt bis zum Abschluss des Alterungsschritts in einer Sauerstoffatmosphäre durchgeführt wird.

3. Verfahren nach Anspruch 1, wobei die Haltezeit des Alterungsschritts, relativ zum Sinterschritt, bei einem Verhältnis von 8 % bis 50 % durchgeführt wird.

4. Verfahren nach Anspruch 3, wobei die Haltezeit des Alterungsschritts, relativ zum Sinterschritt, bei einem Verhältnis von 10 % bis 20 % durchgeführt wird.

5. Verfahren nach Anspruch 1, wobei der Alterungsschritt die Temperatur für 1 Stunde bis 4 Stunden aufrechterhält, wenn die Temperatur in dem Reaktor 300°C bis 600°C während des Abkühlungsschritts erreicht.

6. Verfahren nach Anspruch 5, wobei der Alterungsschritt die Temperatur für 1 Stunde bis 2 Stunden aufrechterhält, wenn die Temperatur in dem Reaktor 400°C bis 500°C während des Abkühlungsschritts erreicht.

7. Positives Elektrodenaktivmaterial, das durch das Verfahren nach einem der Ansprüche 1 bis 6 hergestellt wird und einen Feuchtigkeitsgehalt von 685 ppm oder weniger aufweist.

8. Positive Elektrode für eine Lithiumsekundärbatterie, wobei die positive Elektrode das positive Elektrodenaktivmaterial nach Anspruch 7 umfasst.

9. Lithiumsekundärbatterie, umfassend die positive Elektrode nach Anspruch 8.

## Revendications

1. Procédé de production d'un matériau actif d'électrode positive, le procédé comprenant : le mélange d'une matière première de lithium avec un hydroxyde de métal de transition à contenu élevé en nickel contenant du nickel en une quantité de 60 % en moles ou plus en fonction d'un nombre total de moles de l'hydroxyde de métal de transition et le frittage du mélange pour produire un matériau actif d'électrode positive,
dans lequel le frittage comprend une étape de frittage de traitement thermique de 700 °C à 900 °C pendant 8 heures à 12 heures ;
une étape de refroidissement de refroidissement à température ambiante ; et
une étape de vieillissement présentant un temps de maintien lorsqu'une température atteint un point spécifique pendant l'étape de refroidissement,
dans lequel l'hydroxyde de métal de transition est représenté par la formule 1 :
[Formule 1] NiₓCo_{y}Mn₂M¹_{W}(OH)₂
dans laquelle, dans la formule 1,
0,6<x≤1, 0<y≤0,4, 0<z≤0,4, et 0≤w≤0,01, et
M¹ est au moins un élément choisi dans un groupe composé de Al, Zr, Ti, Mg, Ta, Nb, Mo, Cr, Ba, Sr, et Ca.

2. Procédé selon la revendication 1, dans lequel une réaction de l'étape de frittage à l'achèvement de l'étape de vieillissement est réalisée dans une atmosphère d'oxygène.

3. Procédé selon la revendication 1, dans lequel le temps de maintien de l'étape de vieillissement par rapport à l'étape de frittage est réalisé à un rapport de 8 % à 50 %.

4. Procédé selon la revendication 3, dans lequel le temps de maintien de l'étape de vieillissement par rapport à l'étape de frittage est réalisé à un rapport de 10 % à 20 %.

5. Procédé selon la revendication 1, dans lequel l'étape de vieillissement maintient la température pendant 1 heure à 4 heures lorsque la température dans un réacteur atteint 300 °C à 600 °C pendant l'étape de refroidissement.

6. Procédé selon la revendication 5, dans lequel l'étape de vieillissement maintient la température pendant 1 heure à 2 heures lorsque la température dans le réacteur atteint 400 °C à 500 °C pendant l'étape de refroidissement.

7. Matériau actif d'électrode positive qui est produit par le procédé selon l'une quelconque des revendications 1 à 6 et présente une teneur en humidité de 685 ppm ou moins.

8. Électrode positive pour une batterie rechargeable au lithium, l'électrode positive comprenant le matériau actif d'électrode positive selon la revendication 7.

9. Batterie rechargeable au lithium comprenant l'électrode positive selon la revendication 8.
